# EUROPEAN PATENT APPLICATION

(11) **EP 4 213 243 A1**
(43) Date of publication of application: **19.07.2023**
(21) Application number: 22870329.4
(22) Date of filing: 16.09.2022
(51) Int. Cl.: H01M 4/139, H01M 4/04, H01M 4/62, H01M 4/13, H01M 10/052

(54) **ELECTRODE FOR LITHIUM SECONDARY BATTERY, METHOD FOR MANUFACTURING SAME, AND LITHIUM SECONDARY BATTERY COMPRISING SAME**

(30) Priority: 16.09.2021 KR 20210123848; 16.09.2021 KR 20210123856; 15.09.2022 KR 20220116025
(71) Applicant: LG Energy Solution, Ltd., Seoul 07335 (KR)
(72) Inventor: KIM, Ki Tae, Daejeon 34122 (KR); KIM, Jeonggil, Daejeon 34122 (KR); KIM, Taegon, Daejeon 34122 (KR); KIM, Myeongsoo, Daejeon 34122 (KR); KWON, Hyejin, Daejeon 34122 (KR); HAH, Hoejin, Daejeon 34122 (KR); KIM, Sohee, Daejeon 34122 (KR)
(74) Representative: Goddar, Heinz J.
(86) International application number: PCT/KR2022/013840
(87) International publication number: WO 2023/043245

(57) **Abstract**

The present invention provides an electrode for a lithium secondary battery comprising an electrode active material, an electrically conductive material and a binder, wherein the binder is fiberized in multiple directions. In the case of the active layer, the average diameter (D₅₀) of the particles ground for 30 seconds at 10,000 rpm using a blender including four blades is 200 *µ*m to 500 *µ*m. In the electrode for the lithium secondary battery, the binder contained in the active layer is fiberized in multiple directions, and thus the bonding force between the electrode active material, the electrically conductive material and the binder in the active layer is improved, and furthermore, the durability of the electrode is improved.

## Description

### [Technical Field]

The present invention relates to an electrode for a lithium secondary battery, a preparing method thereof, and a lithium secondary battery comprising the same. Specifically, the present invention relates to an electrode for a lithium secondary battery comprising a binder fiberized in multiple directions in an active layer, a preparing method thereof, and a lithium secondary battery comprising the same.

The present application claims the benefit of priority based on Korean Patent Application No. 10-2021-0123848 filed on September 16, 2021, Korean Patent Application No. 10-2021-0123856 filed on September 16, 2021, and Korean Patent Application No. 10-2022-0116025 filed on September 15, 2022, the entire contents of which are incorporated herein by reference.

### [Background Art]

As technology development and demand for mobile devices are increasing, demand for secondary batteries as an energy source is rapidly increasing. Among these secondary batteries, a lithium secondary battery with high energy density and voltage, long cycle lifetime, and low self-discharging rate has been commercialized and widely used.

When preparing an electrode for a lithium secondary battery, an electrode active material, an electrically conductive material, and a binder are mixed to prepare a mixture containing the electrode active material. The thus-prepared mixture is applied on an electrode current collector, and then pressurized through equipment such as a roll to prepare an electrode. When a binder such as polytetrafluoroethylene (PTFE) is pressed, fiberization proceeds centering on the surface in contact with the roll. This fiberization is done in the moving direction of the roll (Machine Direction, MD direction) and is mostly formed in the binder located on the surface of the electrode. Even when the binder is fiberized, since the electrode active material, the electrically conductive material, and the binder located inside the electrode are still dispersed in the form of small particles, the durability of the electrode may be insufficient. The durability of the electrode is a factor that can also be related to the lifetime of the electrode and can directly affect the performance of the battery. In particular, when the electrode is prepared in a dry method, since the bonding force between the particles of the electrode active material, the electrically conductive material, and the binder may be relatively reduced, fiberization of the binder may play an even more important role, in order to improve the durability of the electrode.

In this technical field, studies are being conducted to improve the durability of electrodes used in lithium secondary batteries, and the present inventors have completed the present invention after these studies.

### [Prior Art Document]

### [Patent Document]

(Patent Document 1) Korean Laid-open Patent Publication No. 10-2014-0136952

### [Disclosure]

### [Technical Problem]

It is an object of the present invention to provide an electrode for a lithium secondary battery capable of improving bonding force between an electrode active material, an electrically conductive material, and a binder, a preparing method thereof, and a lithium secondary battery comprising the same.

### [Technical Solution]

According to a first aspect of the present invention,
the present invention provides an electrode for a lithium secondary battery comprising an active layer comprising an electrode active material, an electrically conductive material, and a binder, wherein the binder is fiberized in multiple directions.

In one embodiment of the present invention, when the active layer is ground for 30 seconds at 10,000 rpm using a blender including four blades, particles from the ground active layer have an average diameter (D₅₀) of 200 gm to 500 µm.

In one embodiment of the present invention, the active layer has a tensile strength of 7.5 kgf/cm² or more in MD direction.

In one embodiment of the present invention, a tensile strength ratio in MD direction/TD direction in the active layer is 1 to 1.3.

In one embodiment of the present invention, the electrode active material is a lithium transition metal oxide having an average diameter (D₅₀) of particles of 7 *µ*m to 30 *µ*m.

In one embodiment of the present invention, the electrically conductive material is a carbonaceous material or a metallic material.

In one embodiment of the present invention, the binder comprises polytetrafluoroethylene.

In one embodiment of the present invention, the binder is contained in the active layer in an amount of 0.5% by weight to 5% by weight based on the total weight of the electrode active material.

According to a second aspect of the present invention,
the present invention provides a method for preparing an electrode for a lithium secondary battery comprising preparing an active layer through steps of
(1) mixing an electrode active material, an electrically conductive material and a binder stored at a low temperature, (2) primarily fiberizing a mixed material at a high temperature, (3) grinding a fiberized material at room temperature, and (4) secondary fiberizing a ground material.

In one embodiment of the present invention, in step (1), the electrode active material, the electrically conductive material, and the binder stored at -20 °C to -1 °C are mixed by a blender rotating at 5,000 RPM to 20,000 RPM.

In one embodiment of the present invention, in step (2), a kneader imparting a shear force of 20 N·m to 200 N·m to the mixed material is used.

In one embodiment of the present invention, in step (2), the mixed material is primarily fiberized at 50 °C to 70 °C with a twin screw kneader rotating at 10 RPM to 50 RPM.

In one embodiment of the present invention, in step (3), the fiberized material is ground at room temperature with a blender rotating at 5,000 RPM to 20,000 RPM.

In one embodiment of the present invention, in step (4), the ground material was secondarily fiberized at 40 °C to 60 °C with a 3 roll mill rotating at 5 RPM to 20 RPM.

In one embodiment of the present invention, the particles ground in step (3) are selected so that only particles having a particle size of 1 mm or less are included before secondary fiberization in step (4).

In one embodiment of the present invention, the particles ground in step (3) are selected so that a Hausner ratio is 1.6 or less before secondary fiberization in step (4) .

### [Advantageous Effects]

In the electrode for the lithium secondary battery according to the present invention, the binder contained in the active layer is fiberized in multiple directions, and thus the bonding force between the electrode active material, the electrically conductive material and the binder in the active layer is improved, and furthermore, the durability of the electrode is improved.

### [Description of Drawings]

FIG. 1 is a view schematically showing the active layer prepared by roll pressing from the top and bottom according to the prior art.
FIG. 2 is a view schematically showing the active layer prepared according to an embodiment of the present invention.
FIG. 3a is an SEM image (magnification: × 3,000) of the inside of the active layer prepared according to Comparative Example 1.
FIG. 3b is an SEM image (magnification: × 3,000) of the outside of the active layer prepared according to Comparative Example 1.
FIG. 4a is an SEM image (magnification: × 3,000) of the inside of the active layer prepared according to Example 1.
FIG. 4b is an SEM image (magnification: × 3,000) of the outside of the active layer prepared according to Example 1.
FIG. 5 is a graph showing the size distribution of particles ground by grinding the active layers prepared according to Example 1 and Comparative Example 1.
FIG. 6 is a graph showing the results of bulk density and tap density measured according to Example 5.
FIG. 7 is a graph showing a measure of fluidity according to the Hausner ratio.

### [Best Mode]

The embodiments provided according to the present invention can all be achieved by the following description. It is to be understood that the following description is to be understood as describing preferred embodiments of the present invention, but not necessarily limiting the present invention.

With respect to the physical properties described herein, if measurement conditions and methods are not specifically described, the physical properties are measured according to measurement conditions and methods generally used by those skilled in the art.

According to one embodiment of the present invention, the present invention provides an electrode for a lithium secondary battery comprising an active layer containing an electrode active material, an electrically conductive material, and a binder, wherein the binder is fiberized in multiple directions. As used herein, the term "fiberized in multiple directions" means that the linear structure formed by fiberization is not aligned in a certain direction, but is irregularly positioned so that the overall linear structure does not have a specific directionality. According to one embodiment of the present invention, the binder fiberized in multiple directions is not concentrated in a direction parallel to the surface near the surface of the active layer, but is evenly distributed to the center of the active layer without a certain direction.

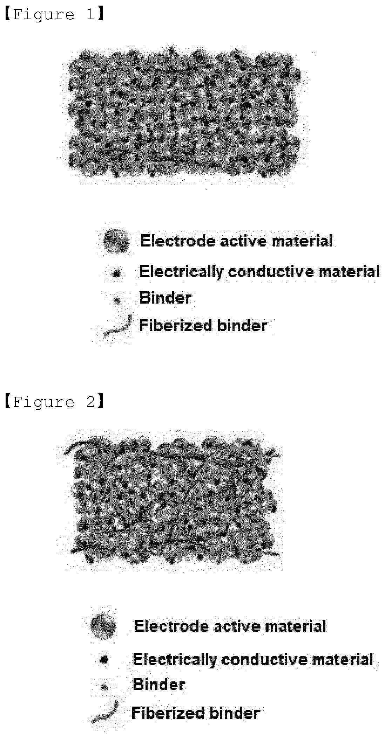

In general, when preparing the electrode for the lithium secondary battery, the electrode active material, the electrically conductive material, and the binder are mixed to prepare a mixture containing the electrode active material. In consideration of the processability of the mixture, the mixture may also be added to a solvent such as water or an organic solvent and used in the form of a slurry. After the mixture is applied on an electrode current collector, the electrode is prepared by pressing through equipment such as a roll. In preparing the mixture, in the case of dry manufacturing without a solvent, the functionality of the binder may be reduced, and thus the cohesive force of the electrode active material, the electrically conductive material and the binder may be lowered. These problems can be solved by fiberizing the binder through pressure. However, when the surface of the mixture is pressed through the roll, there are still insufficient aspects in securing the cohesive force of the components, such as the progression of fiberization centered on the surface in contact with the roll or the progression of fiberization only in a specific direction that is identical to the direction of travel of the roll, as shown in FIG. 1. Accordingly, the present invention provides an electrode for a lithium secondary battery in which the cohesive force between components of the active layer in the electrode is improved through multidirectional fiberization of the binder. Unlike FIG. 1, the active layer in which the binder is fiberized in multiple directions may have the same structure as in FIG. 2.

The active layer means a layer containing the electrode active material, the electrically conductive material, and the binder. If there is a current collector in the electrode, it means a material layer applied on the current collector, and thus means a layer distinct from the current collector of the electrode. Since the active layer contains the electrode active material, it is active in an electrochemical reaction within the electrode, and may be expressed as the electrode active material layer in terms of comprising the electrode active material and as a mixed layer in terms of being formed by mixing the electrode active material, the electrically conductive material, and the binder.

According to one embodiment of the present invention, in the case of the active layer, the average diameter (D₅₀) of the particles grinded at 10,000 rpm for 30 seconds using a blender (Manufacturer: Waring, Equipment: LB10S, Grinding Container: SS110) including four blades is 200 gm to 500 gm. The average diameter (D₅₀) is the particle diameter (median diameter) at 50% of the accumulation based on the volume of the particle size distribution, which refers to a particle diameter at a point where the cumulative value becomes 50% in the cumulative curve obtained by calculating the particle size distribution based on the volume and taking the total volume as 100%. The average diameter (D₅₀) may be measured by a laser diffraction method. Specifically, the average diameter (D₅₀) of the ground particles may be 200 *µ*m or more, 210 *µ*m or more, 220 *µ*m or more, 230 *µ*m or more, 240 *µ*m or more, 250 *µ*m or more, and 500 *µ*m or less, 490 *µ*m or less, 480 *µ*m or less, 470 *µ*m or less, 460 *µ*m or less, 450 *µ*m or less, and 200 *µ*m to 500 *µ*m, 230 *µ*m to 470 *µ*m, 250 *µ*m to 450 *µ*m. The average diameter (D₅₀) of these particles is significantly larger than the size of individual particles of the electrode active material, the electrically conductive material, and the binder constituting the active layer, which is a value indicated by the binding of the components by fiberization of the binder.

In one embodiment of the present invention, the active layer has a tensile strength of 7.5 kgf/cm² or more in MD direction, and a tensile strength ratio in MD direction/TD direction in the active layer is 1 to 1.3. Here, the MD (Machine Direction) direction refers to the direction in which the roll moves before finally preparing the sheet-shaped active layer, and the TD (Transverse Direction) direction refers to a direction perpendicular to the MD direction with respect to the plane of the electrode. Specifically, the tensile strength of the active layer in the MD direction may be 7.5 kgf/cm² or more, 7.6 kgf/cm² or more, 7.7 kgf/cm² or more, 7.8 kgf/cm² or more, 7.9 kgf/cm² or more, 8.0kgf/cm² or more. As the upper limit of the tensile strength in the MD direction of the active layer is higher, the durability of the electrode may be improved. However, in consideration of the electrode manufacturing process, it may be 20 kgf/cm² or less, 18 kgf/cm² or less, 16 kgf/cm² or less, 14 kgf/cm² or less, 12 kgf/cm² or less, 10 kgf/cm² or less. In general, due to rolling during the final electrode manufacturing, the tensile strength in the MD direction is higher than the tensile strength in the TD direction. The active layer according to one embodiment of the present invention exhibits high tensile strength in the MD direction as well as high tensile strength in the TD direction due to secondary fiberization. Specifically, the ratio of tensile strength in the MD direction/TD direction may be 1 or more and since the tensile strength in the TD direction is high, the ratio of tensile strength in the MD direction/TD direction may be 1.30 or less, 1.28 or less, 1.26 or less, 1.24 or less, 1.22 or less, 1.20 or less. In the active layer according to one embodiment of the present invention, the binder is fiberized in multiple directions through primary and secondary fiberization, thereby maintaining strong durability regardless of a specific direction. Since force is not applied only in a specific direction when the battery is driven, having durability in all directions can help improve battery performance. The active layer according to one embodiment of the present invention has excellent durability in almost all directions as the MD/TD direction tensile strength ratio is close to 1. The electrode active material may be a positive electrode active material, when applied to the positive electrode, and may be a negative electrode active material, when applied to the negative electrode. The positive electrode active material or the negative electrode active material is not particularly limited as long as it is generally used in the art.

According to one embodiment of the present invention, the positive electrode active material is a lithium transition metal oxide. In the lithium transition metal oxide, the transition metal has the form of Li₁₊ₓM_{y}O_{2+z}(0≤x≤5, 0<y≤2, 0≤z≤2), wherein M is selected from the group consisting of Ni, Co, Mn, Fe, P, Al, Mg, Ca, Zr, Zn, Ti, Ru, Nb, W, B, Si, Na, K, Mo, V, and combinations thereof, and is not particularly limited within the above range. More specifically, the lithium transition metal oxide is selected from LiCoO₂, LiNiO₂, LiMnO₂, Li₂MnO₃, LiMn₂O₄, Li(NiₐCo_{b}Mn_{c})O₂ (0<a<1, 0<b<1, 0<c<1, a+b+c=1), LiNi_{1-y}Co_{y}O₂ (0<y<1), LiCo_{1-y}Mn_{y}O₂, LiNi_{1-y}Mn_{y}O₂ (0<y<1), Li(NiₐCo_{b}Mn_{c})O₄ (0<a<2, 0<b<2, 0<c<2, a+b+c=2), LiMn_{2-z}Ni_{z}O₄ (0<z<2), LiMn_{2-z}Co_{z}O₄ (0<z<2) and combinations thereof.

According to one embodiment of the present invention, the negative electrode active material is a compound capable of reversibly intercalating and deintercalating lithium. A specific example of the negative electrode active material may be carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as SiO_{β} (0<β<2), SnO₂, vanadium oxide, and lithium vanadium oxide; or a composite including the above-mentioned metallic compound and carbonaceous material, such as a Si-C composite or a Sn-C composite, and any one or a mixture of two or more thereof may be used. In addition, a metal lithium thin film may be used as the negative electrode active material. In addition, as the carbon material, both low crystalline carbon and high crystalline carbon may be used. As low crystalline carbon, soft carbon and hard carbon are representative, and as high crystalline carbon, amorphous, plate-like, flaky, spherical or fibrous natural or artificial graphite, Kish graphite, pyrolytic carbon, mesophase pitch based carbon fiber, meso-carbon microbeads, Mesophase pitches and high-temperature calcined carbon such as petroleum or coal tar pitch derived cokes are representative.

According to one embodiment of the present invention, the electrode active material is a lithium transition metal oxide having an average diameter (D₅₀) of particles of 7 gm to 30 *µ*m. Specifically, the average diameter (D₅₀) of the particles may be 7 gm or more, 7.5 *µ*m or more, 8 gm or more, 8.5*µ*m or more, 9 *µ*m or more, 9.5*µ*m or more, 10 *µ*m or more, and 30 *µ*m or less, 28 *µ*m or less, 26 gm or less, 24 *µ*m or less, 22 *µ*m or less, 20 *µ*m or less, and 7 *µ*m to 30 *µ*m, 8.5 *µ*m to 24 *µ*m, 10 *µ*m to 20 *µ*m. The average diameter (D₅₀) of these particles is significantly smaller than the average diameter (D₅₀) of the above-mentioned grounded active layer particles. It is possible to increase the binding force of the electrode active materials by the multidirectional fiberization of the binder within the above-described range.

The electrically conductive material is used to impart electrical conductivity to the electrode, and can be used without any particular limitation as long as it has electronic conductivity without causing chemical change in the battery to be constructed. A specific example of the electrically conductive material may be graphite such as natural graphite or artificial graphite; carbonaceous materials such as carbon black, acetylene black, Ketjen black, channel black, furnace black, lamp black, thermal black, single wall or multiwall carbon nanotube, carbon fiber, graphene, activated carbon, activated carbon fiber; metal powder or metal fiber of copper, nickel, aluminum, silver, etc.; electrically conductive whiskers such as zinc oxide and potassium titanate; electrically conductive metal oxides such as titanium oxide; or electrically conductive polymers such as polyphenylene derivatives, and one of them may be used or two or more mixtures may be used.

The electrically conductive material may be a carbonaceous material or a metallic material, and the metallic material may comprise the above-described metal powder, metal fibers, electrically conductive metal oxides and the like. The electrically conductive material may be spherical or linear particles. If the electrically conductive material is spherical particles, the average diameter (D₅₀) of the particles may be 1 nm to 100 nm, specifically 5 nm to 70 nm, and more specifically 10 nm to 40 nm, and if the electrically conductive material is linear particles, the length of the linear particles may be 1 *µ*m to 10 gm, specifically 2 *µ*m to 9 *µ*m, and more specifically 3 *µ*m to 8 *µ*m, and the diameter of the vertical cross section may be 10 nm to 500 nm, specifically 50 nm to 350 nm, more specifically 100 nm to 200 nm. The particle size of the electrically conductive material is a significant smaller value compared to the average diameter (D₅₀) of the ground active layer particles described above.

The binder serves to improve adhesion between the particles of the electrode active material and the adhesive force between the electrode active material and the electrode current collector. The binder is a material that can be fiberized by pressure, etc., in order to achieve the object of the present invention, and is not particularly limited as long as it is a material that can be fiberized and is generally used as a binder in the art. According to one embodiment of the present invention. The binder comprises polytetrafluoroethylene. In the case of binder, since it exists in a fiberized state in the active layer, its particle diameter is less important than other components.

According to one embodiment of the present invention, the binder is contained in the active layer in an amount of 0.5 % by weight to 5 % by weight, specifically 1 % by weight to 4.5 % by weight, more specifically 1.5 % by weight to 4 % by weight, based on the total weight of the electrode active material. The present invention is meaningful in that it can increase the cohesive force of the entire active layer even with a small amount of binder.

If the binder basically includes a fibrous binder such as polytetrafluoroethylene, it may be used by modifying the fibrous binder or by mixing an additional binder. The additional binder may be a binder commonly used in the art, as long as the binder has a function of improving adhesion between electrode active material particles and adhesion between the electrode active material and the electrode current collector. According to one embodiment of the present invention, the additional binder is selected from polyvinylidene fluoride (PVDF), vinylidene fluoride-hexafluoropropylene copolymer (PVDF-co-HFP), polyvinyl alcohol, starch, hydroxypropyl Cellulose, regenerated cellulose, polyvinylpyrrolidone, polyimide, polyamideimide, polyethylene, polypropylene, ethylene-propylene-diene monomer (EPDM), sulfonated EPDM, styrene butyrene rubber, fluororubber and their combinations, but is not limited thereto.

The active layer may be applied on the electrode current collector and thus comprised in the electrode. The electrode current collector is not particularly limited as long as it has electrical conductivity without causing chemical change in the battery, and for example, may be stainless steel, aluminum, nickel, titanium, sintered carbon, or aluminum or stainless-steel surface-treated with carbon, nickel, titanium, silver or the like. In addition, the electrode current collector may typically have a thickness of 3 to 500 *µ*m, and by forming fine irregularities on the surface of the electrode current collector, the adhesive force of the electrode active material may be increased. For example, the electrode current collector may be used in various forms, such as film, sheet, foil, net, porous body, foam, and non-woven fabric.

According to one embodiment of the present invention, the present invention provides a preparing method of the electrode for the lithium secondary battery as described above. The preparing method comprises preparing a active layer through steps of (1) mixing an electrode active material, an electrically conductive material and a binder stored at a low temperature, (2) primarily fiberizing the mixed material at a high temperature, (3) grinding the fiberized material at room temperature, and (4) secondary fiberizing the ground material. The active layer prepared in this way is introduced on an electrode current collector as needed, so that a final electrode can be prepared.

Step (1) is a step of uniformly mixing an electrode active material, an electrically conductive material and a binder, wherein by storing the electrode active material, the electrically conductive material, and the binder at a low temperature, it is possible to prevent aggregation of individual particles. According to one embodiment of the present invention, The electrode active material, the electrically conductive material, and the binder are stored at -20 °C to -1 °C. Specifically, the storage temperature may be -20 °C or more, -19 °C or more, -18 °C or more, -17 °C or more, -16 °C or more, -15 °C or more, and -1 °C or less, -2 °C or less, -3 °C or less, -4 °C or less, -5 °C or less, and - 20 °C to -1 °C, -17 °C to -3 °C, -15 °C to -5 °C. This storage temperature minimizes the adhesive force between the particles of the electrode active material, the electrically conductive material, and the binder, and then the particles can be uniformly arranged through mixing. The low-temperature storage may be prolonged, but sufficient effects can be obtained by storing for about 5 to 15 minutes.

The low-temperature stored electrode active material, electrically conductive material and binder are mixed in a blender at room temperature for a short time. According to one embodiment of the present invention, the electrode active material, the electrically conductive material, and the binder are mixed with a blender rotating at 5,000 RPM to 20,000 RPM. Specifically, the rotation speed may be 5,000 RPM or more, 5,500 RPM or more, 6,000 RPM or more, 6,500 RPM or more, 7,000 RPM or more, 7,500 RPM or more, and 20,000 RPM or less, 19,000 RPM or less, 18,000 RPM or less, 17,000 RPM or less, 16,000 RPM or less, 15,000 RPM or less, and 5,000 RPM to 20,000 RPM, 6,000 RPM to 17,000 RPM, 7,500 RPM to 15,000 RPM. This rotation speed enables effective uniform mixing within a short time. The mixing may be performed for a short time within 1 minute to increase the low-temperature storage effect.

Step (2) is a step of primarily fiberizing the mixed material, wherein the binder contained in the mixed material is fiberized and then adheres to the electrode active material and the electrically conductive material. In the first fiberization step, a kneader capable of imparting shear force of a certain level or more to the mixture may be used. In this specification, "kneader" means a device capable of imparting a shear force of, for example, 20 N·m to 200 N·m to a mixture, and if the above-described shear force can be imparted, a "mixer" may also be included in "kneader" in this specification. The shear force means the maximum value of shear force applied to the mixture by the device, and the value is measured through a torque rheometer. Specifically, the shear force may be 20 N·m or more, 25 N·m or more, 30 N·m or more, 35 N·m m or more, 40 N·m or more, 45 N-m or more, 50 N-m or more, and 200 N-m or less, 190 N-m or less, 180 N·m or less, 170 N·m or less, 160 N·m or less, 150 N·m or less, and 20 N·m to 200 N m, 35 N·m to 170 N·m, 50 N·m to 150 N·m. The shear force by such a device may be suitable for fiberization of the binder. According to one embodiment of the present invention, the kneader may be a twin screw kneader or a paradoxical mixer, and specifically may be a twin screw kneader.

According to one embodiment of the present invention, the mixed material is primarily fiberized with a twin screw kneader rotating at 10 RPM to 50 RPM. Specifically, the rotation speed may be 10 RPM or more, 12 RPM or more, 14 RPM or more, 16 RPM or more, 18 RPM or more, 20 RPM or more, and 50 RPM or less, 48 RPM or less, 46 RPM or less, 44 RPM or less, 42 RPM or less, 40 RPM or less, and 10 RPM to 50 RPM, 16 RPM to 46 RPM, 20 RPM to 40 RPM. This rotation speed is a remarkably slow rotation speed unlike the mixing, which is to secure sufficient time for fiberization to proceed. By using the twin screw kneader, sufficient pressure is delivered to the inside of the mixed material to enable overall fiberization. A sufficient effect can be obtained by performing the primary fiberization for about 5 to 10 minutes.

When fiberizing primarily with the twin screw kneader, the formability of the binder increases when it is performed at a high temperature rather than at room temperature. According to one embodiment of the present invention, The primary fiberizing step is carried out at 50 °C to 70 °C. Specifically, the high temperature may be 50 °C or more, 51 °C or more, 52 °C or more, 53 °C or more, 54 °C or more, 55 °C or more, 70 °C or less, 69 °C or less, 68 °C or less, 67 °C or less, 66 °C or less, 65 °C or less, and 50 °C to 70 °C, 53 °C to 67 °C, 55 °C to 65 °C. Such a temperature may be suitable for fiberization of the binder.

Step (3) is a step of primarily grinding the fiberized material, wherein by rearranging primary fiberization through grinding, it enables more complex and multidirectional fiberization during secondary fiberization. According to one embodiment of the present invention, the fiberized material is ground with a blender rotating at 5,000 RPM to 20,000 RPM at room temperature. Specifically, the rotation speed may be 5,000 RPM or more, 5,500 RPM or more, 6,000 RPM or more, 6,500 RPM or more, 7,000 RPM or more, 7,500 RPM or more, and 20,000 RPM or less, 19,000 RPM or less, 18,000 RPM or less, 17,000 RPM or less, 16,000 RPM or less, 15,000 RPM or less, and 5,000 RPM to 20,000 RPM, 6,000 RPM to 17,000 RPM, 7,500 RPM to 15,000 RPM. This rotation speed makes it possible to effectively grind to a suitable size within a short time. If the mixing is performed for a short time, less than 1 minute, it is possible to prevent excessive grinding of the fiberized particles.

Step (4) is a step of secondarily fiberizing the ground material, wherein through grinding, the rearranged primary fiberization is reconnected, and fiberization for the insufficient part is supplemented. According to one embodiment of the present invention, the ground material is secondarily fiberized with a 3 roll mill rotating at 5 RPM to 20 RPM. Specifically, the rotation speed may be 5 RPM or more, 6 RPM or more, 7 RPM or more, 8 RPM or more, 9 RPM or more, 10 RPM or more, and 20 RPM or less, 19 RPM or less, 18 RPM or less, 17 RPM or less, 16 RPM or less, 15 RPM or less, and 5 RPM to 20 RPM, 8 RPM to 17 RPM, 10 RPM to 15 RPM. This rotation speed is a remarkably slow rotation speed unlike mixing and grinding, which is to secure sufficient time for fiberization to proceed. By using a 3 roll mill, the gap between rolls is gradually narrowed to enable step-by-step fiberization, and finally, it is possible to process into a sheet form. The primary fiberization ends naturally as all material passes through the roll.

When secondarily fiberizing with the 3 roll mill, the formability of the binder increases when it is performed at high temperature rather than at room temperature. According to one embodiment of the present invention. The secondary fiberization step is carried out at 40 °C to 60 °C. Specifically, the high temperature may be 40 °C or more, 41 °C or more, 42 °C or more, 43 °C or more, 44 °C or more, 45 °C or more, and 60 °C or less, 59 °C or less, 58 °C or less, 57 °C or less, 56 °C or less, 55 °C or less, and 40 °C to 60 °C, 43 °C to 57 °C, 45 °C to 55 °C. Such a temperature may be suitable for fiberization of the binder, and is for supplementing the primary fiberization, and it is possible to process at a slightly lower temperature than in primary fiberization.

After grinding in step (3), the ground material may be selected before secondary fiberization in step (4). It possible to minimize defects of the active layer and to prepare it in a uniform sheet shape when preparing the active layer through the step of screening materials that can harmonize well with each other among the ground materials, and then fiberizing them into fibers. The ground material can be screened based on particle size. When screening based on particle size, a sieve can be used. According to one embodiment of the present invention, Among the materials ground in step (3), those having a particle size of 1 mm or less are selected. If the particle size is 1 mm or less, since the degree of fluidity is above the normal level, there may be no problem in forming a uniform sheet. If the particle size exceeds 1 mm, since the degree of fluidity is very poor, defects such as formation of pores in the prepared sheet may occur. since the particle size distribution determined through grinding increases the number of particles around the average diameter of the particles, the small-sized particles are not only small in number, but also occupy a small volume, so that they do not significantly adversely affect the formation of the sheet.

According to one embodiment of the present invention, the bulk density of the particles screened through the above method is 0.8 g/ml to 1.5 g/ml. As used herein, the bulk density means the density when the particles are quietly filled without special manipulation. Specifically, the bulk density may be 0.8g/ml or more, 0.9g/ml or more, 1.0g/ml or more, and 1.5g/ml or less, 1.4g/ml or less, 1.3g/ml or less, and 0.8g/ml to 1.5g/ml, 0.9g/ml to 1.4g/ml, 1.0g/ml to 1.3g/ml. When screening particles within the above range, the degree of fluidity may be at a level that does not adversely affect the preparation of the sheet.

According to one embodiment of the present invention, a Hausner ratio of the particles screened through the above method is 1.6 or less. As used herein, the Hausner ratio refers to the value obtained by dividing the tap density by the bulk density, and the tap density refers to the density after compression by additional tapping in a quietly charged state as when measuring the bulk density. In the case of compression by tapping, since the volume filled with particles is reduced, the tap density is generally larger than the bulk density, and thus the Hausner ratio has a value of 1.0 or more. Specifically, the Hausner ratio is 1.6 or less, 1.5 or less, and 1.4 or less. When screening particles within the above range, the degree of fluidity may be at a level that does not adversely affect the preparation of the sheet.

The electrode manufactured according to the above-described method may be applied to a lithium secondary battery. The lithium secondary battery is generally manufactured by inserting an electrolyte after interposing a separator between a positive electrode and a negative electrode, but may be modified into various shapes as needed.

The separator separates the negative electrode and the positive electrode and provides a passage for lithium ions to move, and can be used without any particular limitation as long as it is normally used as a separator in a lithium secondary battery. In particular, it is preferable that the separator has low resistance to ion movement of the electrolyte and excellent impregnation ability with respect to the electrolyte. Specifically, a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, etc. or a laminated structure of two or more layers thereof may be used as the separator. In addition, a conventional porous nonwoven fabric, for example, a nonwoven fabric made of high melting point glass fiber, polyethylene terephthalate fiber, etc. may be used. In addition, a separator coated with a ceramic component or a polymer material may be used to secure heat resistance or mechanical strength, and a single-layer or multi-layer structure may be optionally used.

The electrolyte comprises, but is not limited to, an organic liquid electrolyte, an inorganic liquid electrolyte, a solid polymer electrolyte, a gel polymer electrolyte, a solid inorganic electrolyte, and a molten inorganic electrolyte, which can be used in the manufacture of a lithium secondary battery.

Specifically, the electrolyte may comprise an organic solvent and a lithium salt.

The organic solvent may be used without any particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvents such as dibutyl ether or tetrahydrofuran; a ketone-based solvent such as cyclohexanone; an aromatic hydrocarbon-based solvent such as benzene, or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), propylene carbonate (PC); an alcohol-based solvent such as ethyl alcohol or isopropyl alcohol; nitriles such as R-CN(R is a C2 to C20 linear, branched or cyclic hydrocarbon group, and may include a double bond aromatic ring or an ether bond); amides such as dimethylformamide; dioxolanes such as 1,3-dioxolane; or sulfolanes. Among them, the carbonate-based solvent is preferable, and a mixture of the cyclic carbonate having high ionic conductivity and high dielectric constant that can increase the charge/discharge performance of the battery (e.g., ethylene carbonate or propylene carbonate, etc.) and the linear carbonate-based compound having a low viscosity (e.g., ethylmethyl carbonate, dimethyl carbonate or diethyl carbonate, etc.) is more preferred. In this case, when the cyclic carbonate and the chain carbonate are mixed in a volume ratio of about 1:1 to about 1:9, the performance of the electrolyte may be excellent.

The lithium salt may be used without particular limitation as long as it is a compound capable of providing lithium ions used in a lithium secondary battery. Specifically, the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂. The concentration of the lithium salt is preferably used within the range of 0.1 to 2.0M. If the concentration of the lithium salt is in the above range, since the electrolyte has appropriate conductivity and viscosity, excellent electrolyte performance can be exhibited, and lithium ions can move effectively.

In addition to the above electrolyte components, the electrolyte may further comprise, for example, one or more additives such as haloalkylene carbonate-based compounds such as difluoroethylene carbonate; pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidines, ethylene glycol dialkyl ethers, ammonium salts, pyrrole, 2-methoxyethanol or aluminum trichloride, , for the purpose of improving the lifespan characteristics of the battery, suppressing the decrease in the capacity of the battery, improving the discharge capacity of the battery, etc. In this case, the additive may be contained in an amount of 0.1 to 5% by weight based on the total weight of the electrolyte.

As described above, since the lithium secondary battery comprising the electrode according to the present invention stably exhibits excellent discharge capacity, output characteristics, and capacity retention rate, it is useful in the fields of portable devices such as mobile phones, notebook computers, digital cameras, and electric vehicles such as hybrid electric vehicle (HEV).

Therefore, according to another embodiment of the present invention, a battery module including the lithium secondary battery as a unit cell, and a battery pack including the same are provided.

The battery module or the battery pack may be used as a power source for any one or more medium and large-sized devices of a power tool; an electric vehicle including an electric vehicle (EV), a hybrid electric vehicle, and a plug-in hybrid electric vehicle (PHEV); or a power storage system, etc.

Hereinafter, preferred Examples are presented to help the understanding of the present invention, but the following Examples are provided for easier understanding of the present invention, and the present invention is not limited thereto.

### Example

### Example 1

96 % by weight of LiNi_{0.5}Co_{0.3}Mn_{0.2}O₂ (Average diameter (D₅₀) of the particles: 10*µ*m, Manufacturer: LG Chem, Product: HN803S) as an electrode active material, 2 % by weight of VGCF (Vapor Grown Carbon Fiber, Average diameter: 150nm, average length: 6*µ*m, Manufacturer: Showa Denko, Product: VGCF-H) as an electrically conductive material, 2 % by weight of polytetrafluoroethylene(Average diameter(D₅₀) of the particles: 500*µ*m, Manufacturer: Chemours, Product: 601x) as a binder were prepared by storing them in a freezer at - 10 °C for 10 minutes. The prepared electrode active material, the electrically conductive material, and the binder were taken out of the freezer and mixed in a blender (Manufacturer: Waring, Equipment: LB10S, Vessel: SS110) at room temperature condition and rotation speed of 10,000 RPM for 30 seconds. The mixed material was primarily fiberized in a twin screw kneader (Manufacturer: Brabender, Product: Torque rheometer) for 5 minutes at a temperature condition of 60 °C and a rotation speed of 30 RPM. The fiberized material was ground in a blender (Manufacturer: Waring, Equipment: LB10S, Vessel: SS110) at room temperature condition and rotation speed of 10,000 RPM for 30 seconds. Of the ground particles, only particles with a particle size of 1 mm or less were separately selected, and an active layer in the form of a sheet is finally prepared by rolling the selected particles at a temperature of 50°C and a rotation speed of 10 RPM in a 3-roll mill (roll spacing: 150*µ*m/10*µ*m, manufacturer: Kmtech, product: KRM-80B).

### Comparative Example 1

96 % by weight of LiNi_{0.5}Co_{0.3}Mn_{0.2}O₂ (Average diameter (D₅₀) of the particles: 10*µ*m, Manufacturer: LG Chem, Product: HN803S) as an electrode active material, 2 % by weight of VGCF(Vapor Grown Carbon Fiber, Average diameter: 150nm, average length: 6*µ*m, Manufacturer: Showa Denko, Product: VGCF-H) as an electrically conductive material, 2 % by weight of polytetrafluoroethylene (Average diameter (D₅₀) of the particles: 100nm, Manufacturer: Chemours, Product: 601x) as a binder were prepared by storing them in a freezer at - 10 °C for 10 minutes. The prepared electrode active material, the electrically conductive material, and the binder were taken out of the freezer and mixed in a blender (Manufacturer: Waring, Equipment: LB10S, Vessel: SS110) at room temperature condition and rotation speed of 10,000 RPM for 30 seconds. An active layer in the form of a sheet is finally prepared by rolling the mixed material at a temperature of 50°C and a rotation speed of 10 RPM in a 3-roll mill (roll spacing: 150*µ*m/100*µ*m, manufacturer: Kmtech, product: KRM-80B).

### Comparative Example 2

The active layer prepared in Comparative Example 1 was ground in a blender (Manufacturer: Waring, Equipment: LB10S, Vessel: SS110) at room temperature condition and rotation speed of 10,000 RPM for 30 seconds. Of the ground particles, only particles with a particle size of 1 mm or less were separately selected, and an active layer in the form of a sheet is finally prepared by rolling the selected particles at a temperature of 50°C and a rotation speed of 10 RPM in a 3-roll mill (roll spacing: 150*µ*m/100*µ*m, manufacturer: Kmtech, product: KRM-80B).

### Comparative Example 3

An active layer in the form of a sheet was prepared in the same manner as in Example 1, except that LiNi_{0.5}Co_{0.3}Mn_{0.2}O₂ having an average particle diameter (D₅₀) of 5 um was used as the electrode active material.

### Experimental Example

### Experimental Example 1

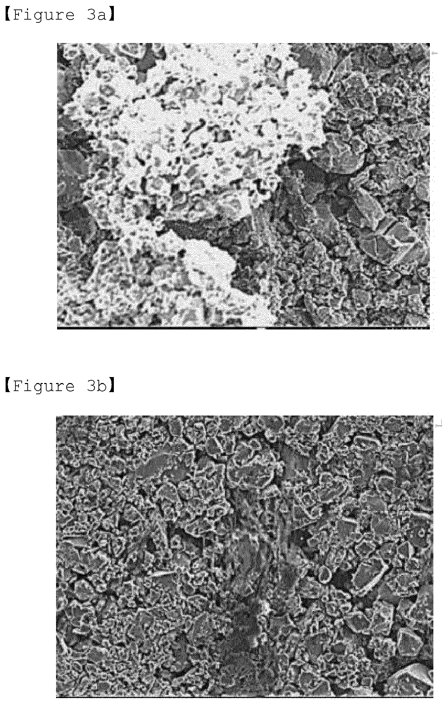

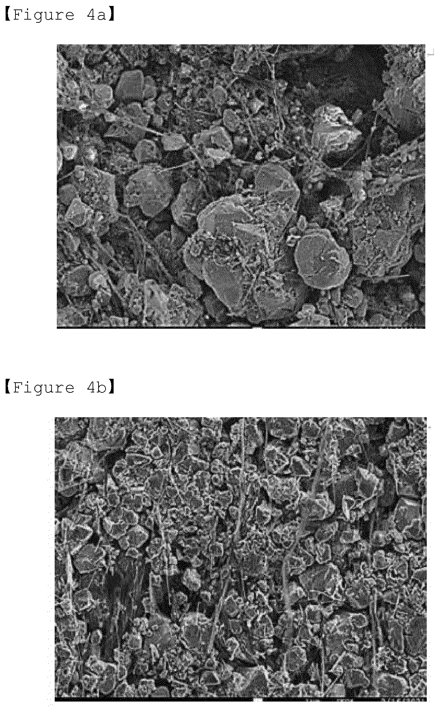

The internal and external structures of each active layer prepared according to Example 1 and Comparative Example 1 were confirmed through a scanning electron microscope (SEM, magnification: ×3,000, Manufacturer: JEOL, Product: JSM-7200F), and the results are shown in FIG. 3a (inside of the active layer of Comparative Example 1), FIG. 3b (outside of the active layer of Comparative Example 1), FIG. 4a (inside of the active layer of Example 1), and FIG. 4b (outside of the active layer of Example 1).

Comparing FIG. 3a and FIG. 4a for the inside of the active layer, it was confirmed that in the case of the inside of the active layer of Comparative Example 1, polytetrafluoroethylene is aggregated without fiberization, but it was confirmed that in the case of the inside of the active layer of Example 1 (FIG. 4a), polytetrafluoroethylene is fiberized, and the electrode active material and the electrically conductive material are adhered by fiberized polytetrafluoroethylene.

Comparing FIG. 3b and FIG. 4b for the outside of the active layer, in the case of the outside of the active layer of Comparative Example 1 (FIG. 3b), although polytetrafluoroethylene was fiberized, the fiberization part was not clearly identified, but in the case of the outside of the active layer of Example 1 (FIG. 4b), since it was fiberized once more by roll pressing, the fiberization part was more clearly identified.

### Experimental Example 2

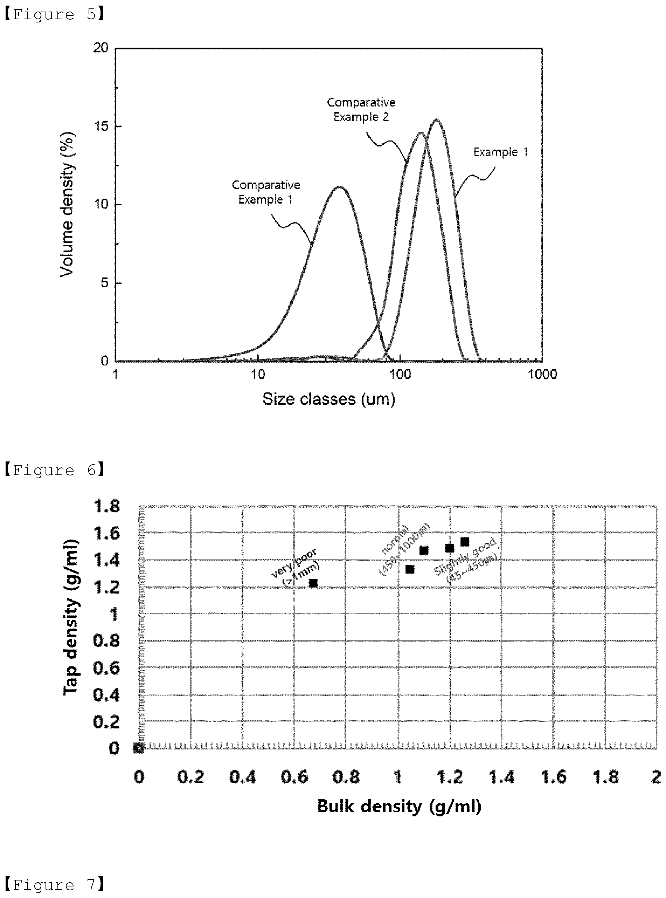

Each active layer prepared according to Example 1, and Comparative Examples 1 and 2 was ground in a grinding device (Manufacturer: Waring, Equipment: LB10S, Grinding Container: SS110) at 10,000 rpm for 30 seconds, and the size of the ground particles was analyzed through Optical PSD (Malvern Morphology). The results are shown in FIG. 5.

In the case of the active layer of Comparative Example 1, the degree of adhesion between the materials constituting the active layer was not high, and thus the materials were ground into individual particles or small aggregated particles. In the case of the active layer of Comparative Example 2, the degree of adhesion between the materials constituting the active layer through two rollings was improved compared to Comparative Example 1, and the materials were ground into larger aggregated particles than in Comparative Example 1. In the case of the active layer of Example 1, degree of adhesion between the materials constituting the active layer was the highest by using a twin screw kneader during primary fiberization, and the materials were ground into relatively much larger aggregated particles compared to Comparative Examples 1 and 2. According to FIG. 5, the size distributions of the particles of Comparative Examples 1 and 2 and Example 1 were each shown separately. Actually, it was found that the average diameter (D₅₀) of the ground particles in Comparative Example 1 was 50 *µ*m, the average diameter (D₅₀) of the ground particles in Comparative Example 2 was 150 *µ*m, and the average diameter (D₅₀) of the ground particles in Example 1 was 400 *µ*m.

### Experimental Example 3

Each of the active layers prepared according to Example 1, and Comparative Examples 1 and 2 was analyzed for tensile strength in the MD and TD directions through a tensile strength measuring device (manufacturer: LLOYD, product: LS1). The results are shown in Table 1 below.

**Table 1:**

| tensile strength | Example 1 | Comparative Example 1 | Comparative Example 2 |
|---|---|---|---|
| MD direction (kgf/cm²) | 8.3 | 3.3 | 6 |
| TD direction (kgf/cm²) | 7.1 | 1.9 | 5.2 |
| MD direction /TD direction | 1.16 | 1.7 | 1.15 |

According to Table 1, Example 1 and Comparative Examples 1 and 2 both showed high tensile strength in the MD direction, but in the case of Example 1 and Comparative Example 2, which were rolled after grinding, the tensile strength ratio in the MD direction/TD direction was also less than 1.2, indicating that the difference in tensile strength in the MD direction and TD direction was not large. As in Example 1, when a twin screw kneader was used for primary fiberization, the tensile strength in the MD direction and TD direction was improved by 35% or more, respectively, compared to Comparative Example 2 using a roll mill for primary fiberization.

### Experimental Example 4

Each of the active layers prepared according to Example 1 and Comparative Example 3 was analyzed for tensile strength in the MD direction through a tensile strength measuring device. The results are shown in Table 2 below.

**Table 2:**

| tensile strength | Example 1 | Comparative Example 3 |
|---|---|---|
| MD direction (kgf/cm²) | 8.3 | 3.1 |

According to Table 2, in the case of Comparative Example 3 in which the average diameter (D₅₀) of the particles of the electrode active material was 5 um, the tensile strength in the MD direction compared to Example 1 in which the average diameter (D₅₀) of the particles of the electrode active material was 10 um was markedly lower.

### Experimental Example 5

After classifying the particles ground in Example 1 into 5 sections (Based on particle size, section 1: more than 45 *µ*m and 150 *µ*m or less, section 2: more than 150 *µ*m and 450 *µ*m or less, section 3: more than 450 *µ*m and 850 *µ*m or less, section 4: more than 850 *µ*m and 1,000 *µ*m or less, section 5: more than 1,000 *µ*m) by size and measuring the bulk density and tap density, the Hausner ratio was calculated and shown in Table 3 and FIG. 6 below.

**Table 3:**

| Particle size | Bulk density (g/ml) | Tap density (g/ml) | Hausner ratio |
|---|---|---|---|
| Section 1: more than 45 *µ*m and 150 *µ*m or less | 1.25 | 1.51 | 1.21 |
| Section 2: more than 150 *µ*m and 450 *µ*m or less | 1.20 | 1.45 | 1.20 |
| Section 3: more than 450 *µ*m and 850 *µ*m or less | 1.07 | 1.36 | 1.27 |
| Section 4: more than 850 *µ*m and 1,000 *µ*m or less | 1.09 | 1.45 | 1.33 |
| Section 5: more than 1,000 *µ*m | 0.71 | 1.2 | 1.68 |

| | | | |
|---|---|---|---|
| * Bulk density (g/ml): the mass when the particles are quietly filled in a 100 ml cylinder is measured and the mass per unit volume is calculated (Average value measured 5 times repeatedly)(Manufacturer: SEISHIN, Product: KYT-4000)* tap density(g/ml): The mass, after quietly filling the 100ml cylinder with particles and then arbitrarily compressing the cylinder filled with particles by tapping 1,000 times with a constant force using a tab density volumeter, is measured, and the mass per unit volume is calculated (average value measured 5 times repeatedly). * Hausner ratio: the value obtained by dividing the tap density by the bulk density | | | |

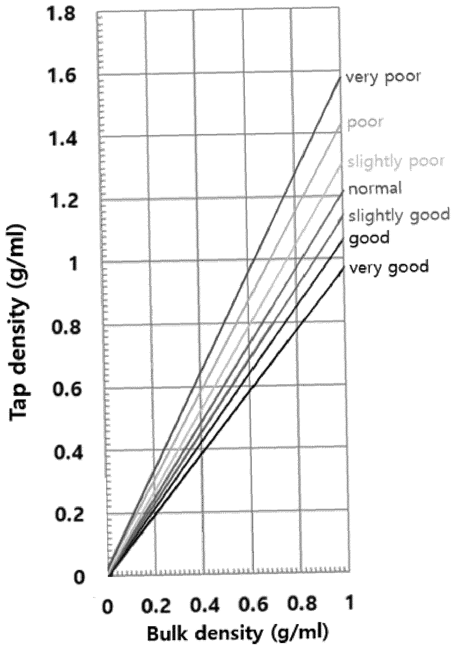

The scale of fluidity according to the Hausner ratio can be evaluated as shown in Table 4 and FIG. 7 based on the following criteria named by Henry H. Hausner.

**Table 4:**

| Hausner ratio | Fluidity evaluation |
|---|---|
| more than 1.60 | very poor |
| 1.46 or more and less than 1.60 | poor |
| 1.35 or more and less than 1.46 | slightly poor |
| 1.26 or more and less than 1.35 | normal |
| 1.19 or more and less than 1.26 | slightly good |
| 1.12 or more and less than 1.19 | good |
| 1.00 or more and less than 1.12 | very good |

According to the scale of fluidity according to the Hausner ratio of Table 4, it can be seen that in Table 3, section 5 has very poor fluidity, sections 3 and 4 have normal fluidity, and sections 1 and 2 have slightly good fluidity. If there is a difference in fluidity depending on the ground particles, unnecessary damage may occur when preparing the electrode through the secondary fiberization step later.

All simple modifications and variations of the present invention fall within the scope of the present invention, and the specific scope of protection of the present invention will become apparent from the appended claims.

## Claims

1. An electrode for a lithium secondary battery comprising an active layer containing an electrode active material, an electrically conductive material and a binder, wherein the binder is fiberized in multiple directions.

2. The electrode for the lithium secondary battery according to claim 1, wherein, when the active layer is ground for 30 seconds at 10,000 rpm using a blender including four blades, particles from the ground active layer have an average diameter (D₅₀) of 200 *µ*m to 500 *µ*m.

3. The electrode for the lithium secondary battery according to claim 1, wherein the active layer has a tensile strength of 7.5 kgf/cm² or more in MD direction.

4. The electrode for the lithium secondary battery according to claim 1, wherein a tensile strength ratio in MD direction/TD direction in the active layer is 1 to 1.3.

5. The electrode for the lithium secondary battery according to claim 1, wherein the electrode active material is a lithium transition metal oxide having an average diameter (D₅₀) of particles of 7 *µ*m to 30 *µ*m.

6. The electrode for the lithium secondary battery according to claim 1, wherein the electrically conductive material is a carbonaceous material or a metallic material.

7. The electrode for the lithium secondary battery according to claim 1, wherein the binder comprises polytetrafluoroethylene.

8. The electrode for the lithium secondary battery according to claim 1, wherein the binder is contained in the active layer in an amount of 0.5% by weight to 5% by weight based on the total weight of the electrode active material.

9. A method for preparing the electrode for the lithium secondary battery of claim 1, which comprises preparing an active layer through steps of,
(1) mixing an electrode active material, an electrically conductive material and a binder stored at a low temperature;
(2) primarily fiberizing a mixed material at a high temperature;
(3) grinding a fiberized material at room temperature; and
(4) secondary fiberizing a ground material.

10. The method for preparing the electrode for the lithium secondary battery according to claim 9, wherein in step (1), the electrode active material, the electrically conductive material, and the binder stored at -20 °C to -1 °C are mixed with a blender rotating at 5,000 RPM to 20,000 RPM.

11. The method for preparing the electrode for the lithium secondary battery according to claim 9, wherein in step (2), a kneader imparting a shear force of 20 N·m to 200 N·m to the mixed material is used.

12. The method for preparing the electrode for the lithium secondary battery according to claim 9, wherein in step (2), the mixed material is primarily fiberized at 50 °C to 70 °C with a twin-screw kneader rotating at 10 RPM to 50 RPM.

13. The method for preparing the electrode for the lithium secondary battery according to claim 9, wherein in step (3), the fiberized material is ground at room temperature with a blender rotating at 5,000 RPM to 20,000 RPM.

14. The method for preparing the electrode for the lithium secondary battery according to claim 9, wherein in step (4), the ground material is secondarily fiberized at 40 °C to 60 °C with a 3 roll mill rotating at 5 RPM to 20 RPM.

15. The method for preparing the electrode for the lithium secondary battery according to claim 9, wherein the particles ground in step (3) are selected so that only particles having a particle size of 1 mm or less are included before secondary fiberization in step (4).

16. The method for preparing the electrode for the lithium secondary battery according to claim 9, wherein the particles ground in step (3) are selected so that a Hausner ratio is 1.6 or less before secondary fiberization in step (4) .
